# EUROPÄISCHE PATENTSCHRIFT

(11) **EP 0 508 048 B1**
(45) Veröffentlichungstag und Bekanntmachung des Hinweises auf die Patenterteilung: **29.03.1995**
(21) Anmeldenummer: 92101399.1
(22) Anmeldetag: 29.01.1992
(51) Int. Cl.: B65G 51/06

(54) **Rohrpostbüchse**
Carrier for tube mail
Cartouche pour courrier par tube

(30) Priorität: 09.04.1991 DE 4111475
(43) Veröffentlichungstag der Anmeldung: 14.10.1992
(73) Patentinhaber: TECHNO MARK AG, 6343 Rotkreuz (CH)
(72) Erfinder: Lang, Hartmut, D-73207 Plochingen (DE); Kaiser, Siegfried, D-72622 Nürtingen (DE)
(74) Vertreter: Witte, Alexander, Dr.-Ing.

(56) Entgegenhaltungen:
- DE-C- 107 849
- DE-C- 893 465
- FR-A- 582 865
- FR-A- 2 605 672
- US-A- 1 911 713
- US-A- 2 562 580

## Beschreibung

Die Erfindung betrifft eine Rohrpostbüchse mit mindestens einem mit einem Deckel versehenen Kopf.

Eine Rohrpostbüchse der vorstehend genannten Art ist bekannt.

Bei bekannten Rohrpostbüchsen von typischerweise zylindrischer Gestalt ist üblicherweise ein Ende oder auch beide Enden der Rohrpostbüchse mit einem verschließbaren Deckel versehen, um das zu befördernde Gut in den Innenraum der Rohrpostbüchse einbringen bzw. wieder aus diesem herausnehmen zu können.

Bei herkömmlichen Rohrpostbüchsen, die zum Transport leichter Gegenstände, beispielsweise von Schriftstücken, Banknoten oder Arzneimitteln dienen, werden an den Deckel keine besonderen Anforderungen gestellt, weil auch bei starkem Abbremsen oder Auftreffen der Rohrpostbüchsen in Rohrpoststationen nur verhältnismäßig geringe Massen abgebremst werden müssen.

Diese Verhältnisse sind bei der sogenannten Schwerrohrpost anders, weil dort Maschinenteile, Montageelemente, Werkzeuge oder dgl. befördert werden, so daß die Rohrpostbüchse ein Gesamtgewicht von 10 bis 20 kg bei Fahrgeschwindigkeiten von 5 bis 10 m/s erreichen kann. Es liegt auf der Hand, daß hierbei erhebliche kinetische Energien auftreten, die beim Auftreffen einer Rohrpostbüchse in einer Rohrpoststation zu erheblichen Kräften führen. Es muß dabei unbedingt sichergestellt sein, daß sich die Rohrpostbüchse nicht selbsttätig öffnet, beispielsweise unter Einwirkung der vom beförderten Gut beim Abbremsen ausgeübten Kräfte.

Bei herkömmlichen Rohrpostbüchsen wird der Deckel entweder durch ein aufschraubbares topfartiges Element gebildet, es sind aber auch Rohrpostbüchsen bekannt, bei denen der Deckel quer zur Längsrichtung der Rohrpostbüchse eingeschoben wird. Während im erstgenannten Fall die Verrastung des Deckels durch Erreichen der Endstellung des betreffenden Gewindes erreicht wird, ist es bei den weiter genannten Rohrpostbüchsen bekannt, den seitlich eingeschobenen Deckel durch eine elastische Rastnase aus einem Kunststoff oder dgl. zu fixieren.

Bei den bekannten Rohrpostbüchsen sind in jedem Fall verhältnismäßig komplizierte Bewegungen des Benutzers erforderlich, um eine Rohrpostbüchse zu öffnen bzw. wieder zu verschließen. Aus diesem Grunde ist es mit bekannten Rohrpostbüchsen nicht möglich, diese in automatisierten Anlagen einzusetzen, bei denen die Rohrpostbüchsen automatisch geöffnet und/oder verschlossen werden können.

In dem DE-U-89 04 558 ist zwar eine Rohrpoststation beschrieben, bei der ein automatisches Öffnen der Rohrpostbüchse möglich sein soll, es ist jedoch nicht angegeben, wie die Rohrpostbüchse im einzelnen aufgebaut sein muß, damit die oben beschriebenen Anforderungen erfüllt werden. Auch ist die bekannte Rohrpoststation offensichtlich für Schwerrohrpostanwendungen nicht geeignet.

Bei der bekannten Rohrpoststation werden ankommende Rohrpostbüchsen in einer vorbestimmten Horizontalebene abgebremst und angehalten, um dann in dieser Horizontalebene verfahren zu werden. In einer zweiten Position innerhalb der Horizontalebene werden die angekommenen Rohrpostbüchsen alsdann mittels einer Hubvorrichtung in vertikaler Richtung in eine zweite, höhere Horizontalebene verfahren. Hierzu wird eine Kolben-Zylinder-Anordnung verwendet, die unterhalb der ersten Horizontalebene angeordnet ist und deren Kolbenstange solange ausgebildet ist, daß sie die Rohrpostbüchsen von der unteren, ersten Horizontalebene in die obere, zweite Horizontalebene zu verfahren vermag. In der zweiten Horizontalebene wird die angekommene Rohrpostbüchse an ihrem unteren axialen Ende arretiert. Von oben nähert sich nun ein Halter, der mittels einer zweiten Kolben-Zylinder-Einheit in vertikaler Richtung verfahrbar ist, die sich oberhalb der zweiten Horizontalebene befindet. Der Halter setzt von oben auf das obere axiale Ende der Rohrpostbüchse auf und ergreift dieses. Die Rohrpostbüchse der bekannten Rohrpoststation ist axial zweiteilig ausgebildet. Wird nun der Halter nach oben durch Einziehen der zweiten Kolben-Zylinder-Einheit verfahren, so nimmt der Halter die obere Hälfte der Rohrpostbüchse mit, während die untere Hälfte in der zweiten Horizontalebene verrastet bleibt.

Auf diese Weise soll zwar bei der bekannten Rohrpoststation erreicht werden, daß angekommene Rohrostbüchsen geöffnet werden und der Inhalt von einem Benutzer der Rohrpoststation entnommen werden kann. Hierzu ist jedoch ersichtlich erforderlich, daß die Rohrpostbüchse ohne weitere Handhabung durch schlichtes Auseinanderziehen der beiden Büchsenhälften geöffnet werden kann. Dies setzt voraus, daß die beiden axial geteilten Hälften durch lediglich einfache elastische Rastmittel oder dgl. miteinander verbunden sind, die sich durch die Betätigungskraft der Kolben-Zylinder-Einheiten überwinden lassen.

Eine solche Konstruktion einer Rohrpostbüchse ist jedoch für Anwendungen in der Schwerrohrpost gänzlich ungeeignet, weil bei dieser Anwendung unabdingbar ist, daß der Deckel der Rohrpostbüchse mit hoher Stabilität verriegelt wird, um zu verhindern, daß das in der Rohrpostbüchse beförderte lose, jedoch sehr schwere Gut den Deckel selbsttätig öffnet, wenn die Rohrpostbüchse mit ihrem Inhalt in einer Rohrpoststation auftrifft.

Durch die FR-A-582 865 ist eine Rohrpostbüchse bekannt geworden mit mindestens einem mit einem Deckel versehen Kopf, wobei der Deckel mittels am Kopf angeordneter und bewegbarer Riegelmittel in eine Offenstellung sowie eine Schließstellung bringbar und mindestens in der Schließstellung verrastbar ist, wobei die Riegelmittel in einer Richtung parallel zu einer Längsachse der Rohrpostbüchse bewegbar sind, und wobei der Deckel um eine Schwenkachse schwenkbar ist, die senkrecht zu einer Längsachse der Rohrpostbüchse verläuft.

Auch diese bekannte Rohrpostbüchse ist nicht für die Verhältnisse der Schwerrohrpost geeignet und ermöglicht insbesondere kein automatisches Schließen und Öffnen des Deckels.

Ferner sei auf die US-A-1 911 713 verwiesen, aus der eine ähnliche Rohrpostbüchse bekannt ist.

Der Erfindung liegt daher die Aufgabe zugrunde, eine Rohrpostbüchse dahingehend weiterzubilden, daß der Deckel durch einfache Bewegungsabläufe geöffnet und dabei entriegelt bzw. geschlossen und dabei verriegelt werden kann, damit die Rohrpostbüchse auch in halbautomatisierten oder vollautomatisierten Rohrpostanlagen einsetzbar ist.

Diese Aufgabe wird erfindungsgemäß dadurch gelöst, daß bei einer Rohrpostbüchse der aus der FR-A-582 865 bekannten Art die Riegelmittel auf einer Umfangsfläche eines Flansches laufen und den Deckel in der Schließstellung an einer Umfangsfläche umschließen, und daß die mindestens eine Schwenkachse in unmittelbarer Nähe der Umfangsfläche des Deckels liegt.

Die der Erfindung zugrunde liegende Aufgabe wird auf diese Weise vollkommen gelöst.

Erfindungsgemäß wird ein einfaches Öffnen und gleichzeitiges Entriegeln sowie Schließen und gleichzeitiges Verriegeln durch die Riegelmittel erreicht. Da die Riegelmittel auf einer Umfangsfläche eines Flansches laufen und den Deckel in der Schließstellung an einer Umfangsfläche umschließen, wird eine besonders einfache Verriegelung des geschlossenen Deckels erreicht, wenn dieser an seinem Umfang gehalten wird, so daß er nicht mehr um die mindestens eine senkrecht zur Längsachse verlaufende Schwenkachse aufgeschwenkt werden kann. Da die mindestens eine Schwenkachse in unmittelbarer Nähe der Umfangsfläche des Deckels liegt, schwenkt bei einer zu öffnenden, ankommenden Rohrpostbüchse der Deckel in vertikaler Stellung der Rohrpostbüchse selbsttätig auf, da der Schwerpunkt des Deckels radial zwischen der Schwenkachse und der Längsachse liegt, so daß der Deckel selbsttätig aufklappt.

Bei einer bevorzugten Weiterbildung dieser Variante besteht der Deckel aus mindestens zwei Segmenten, die jeweils um in einer Radialebene zur Längsachse liegende Schwenkachsen schwenkbar sind.

Diese Maßnahme hat den Vorteil, daß nur relativ kleine Bewegungen der Deckelsegmente, verglichen mit der Bewegung des Gesamtdeckels, erforderlich sind. Dies ermöglicht es in einfacherer Weise, den Öffnungs- bzw. Schließvorgang des Deckels zu optimieren, insbesondere auch durch Fremdkraftbetätigung zu automatisieren.

Bei weiteren bevorzugten Varianten der Erfindung ergreifen die Riegelmittel den Deckel formschlüssig.

Diese Maßnahme hat den Vorteil, daß eine besonders gute Verriegelung erzielt wird, die bei entsprechender Komplexität des Formschlusses noch optimiert werden kann.

Eine besonders gute Wirkung wird bei diesem Ausführungsbeispiel dann erzielt, wenn die Riegelmittel einen Riegel umfassen, der zwei Segmente des Deckels entlang einer Trennebene der Segmente gemeinsam ergreift und in der Schließstellung formschlüssig hält.

Diese Maßnahme hat den Vorteil, daß der Formschluß zusätzlich dazu dient, um zwei Deckelsegmente miteinander zu verbinden, so daß durch nur ein Riegelelement gleich zwei Deckelsegmente verriegelt werden.

Bei weiteren Ausführungsbeispielen der Erfindung umfassen die Riegelmittel einen axial verschiebbaren Betätigungsring, an dem axial laufende Riegel befestigt sind.

Diese Maßnahme hat zunächst den bereits weiter oben erwähnten Vorteil, daß ein einfacher Bewegungsablauf der Riegelmittel, nämlich lediglich eine axiale Auslenkung vorhanden ist, andererseits kann der Betätigungsring durch Vorsehen entsprechender Nuten auch so optimiert werden, daß ein Ergreifen mit beispielsweise U-förmigen Greifern von herkömmlichen Handhabungsmitteln möglich ist.

Schließlich sind noch Ausführungsbeispiele der Erfindung besonders bevorzugt, bei denen die Riegelmittel zugleich ein Öffnen oder ein Schließen des Deckels bewirken.

Diese Maßnahmen haben den besonderen Vorteil, daß eine gesonderte Handhabung zum Öffnen und/oder Schließen des Deckels nicht mehr erforderlich ist, weil die Öffnungs- und/oder Schließbewegung des Deckels zwangsgesteuert unter der Wirkung der Riegelmittel erfolgt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht eines Ausführungsbeispiels einer erfindungsgemäßen Rohrpostbüchse;
- Fig. 2: in stark vergrößertem Maßstab eine ausschnittsweise Schnittdarstellung entlang der Ebene II-II von Fig. 1;
- Fig. 3: eine Darstellung ähnlich Fig. 2, entlang der gleichen Ebene III-III von Fig. 1, jedoch in einer anderen Betriebsstellung der Rohrpostbüchse;
- Fig. 4: in etwas weniger vergrößertem Maßstab eine Draufsicht entlang der Richtung IV-IV von Fig. 1;
- Fig. 5: eine Darstellung, ähnlich Fig. 4, entlang derselben Richtung V-V von Fig. 1, jedoch für eine andere Betriebsstellung der erfindungsgemäßen Rohrpostbüchse;
- Fig. 6: eine ausschnittsweise Schnittdarstellung entlang der Linie VI-VI von Fig. 4.

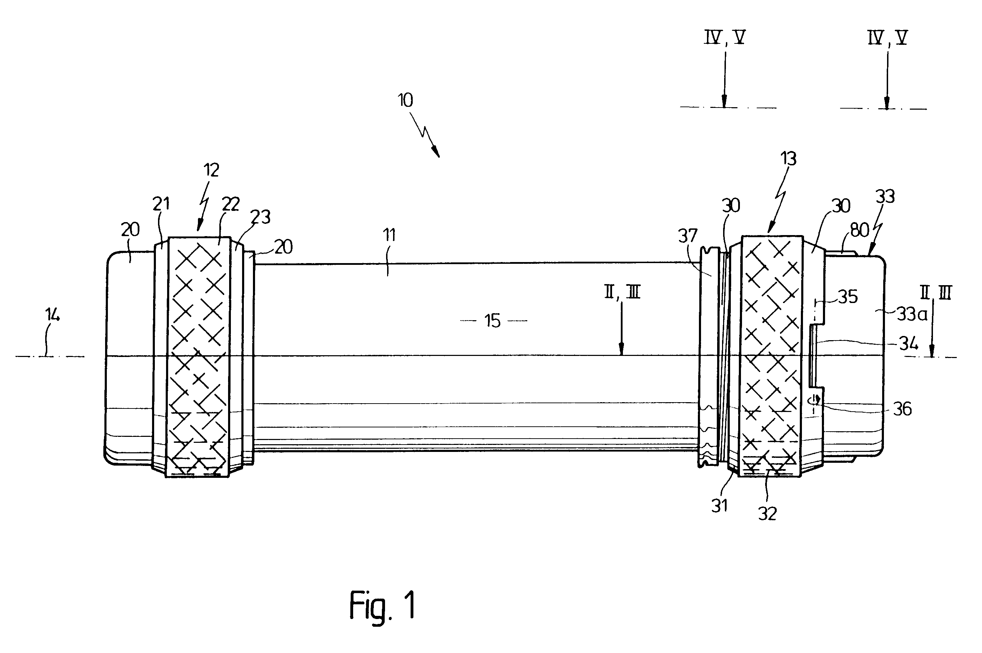

In Fig. 1 bezeichnet 10 insgesamt eine Rohrpostbüchse von im wesentlichen bekannter Bauart. Die Rohrpostbüchse 10 wird für die sogenannte Schwerrohrpost eingesetzt. Hierunter versteht man eine Anwendung, bei der in den Rohrpostbüchsen 10 schwere Teile, beispielsweise Maschinenteile, Maschinenelemente, Werkzeuge und dgl. innerhalb von industriellen Fabrikations- und Montageanlagen befördert werden. Typischerweise befördert eine Schwerrohrpost dabei Montagematerial wie Schrauben, Bolzen, Muttern und dgl. an Montageplätze oder auch Werkzeuge unterschiedlicher Art, beispielsweise Bohrer, Fräser, Drehstähle und dgl. zu bestimmten Bearbeitungsplätzen einer industriellen Anlage. In der Schwerrohrpost werden dabei typischerweise Büchsengewichte zwischen 10 und 20 kg bei Fahrgeschwindigkeiten von 5 bis 10 m/s gefahren.

Die Schwerrohrpost unterscheidet sich damit wesentlich von der herkömmlichen Rohrpost, bei der nur leichte Güter, beispielsweise Schriftstücke, Banknoten, Medikamente und dgl. befördert werden. Die in der Schwerrohrpost auftretenden kinetischen Energien der fahrenden Rohrpostbüchsen liegen nämlich um mehrere Größenordnungen über den bei herkömmlichen Rohrpostanlagen auftretenden Energien. Dies bedeutet, daß bei Schwerrohrpostanwendungen besonderes Augenmerk auf die Konstruktion der Anlagenbausteine, d.h. der Rohrpostbüchsen, der Rohrleitungen und der Stationen gelegt werden muß.

Die nachfolgende Schilderung der Erfindung orientiert sich am dargestellten Ausführungsbeispiel von zylindrischen Rohrpostbüchsen 10. Es versteht sich jedoch, daß die vorliegende Erfindung ebenso gut bei Rohrpostbüchsen mit anderem Querschnitt, beispielsweise bei solchen mit rechteckigem Querschnitt, eingesetzt werden können, sofern dies nicht ausdrücklich für spezielle Einzelmerkmale anders erwähnt ist.

Die Rohrpostbüchse 10 umfaßt ein langes Rohrstück 11, das vorzugsweise aus einem durchsichtigen Kunststoff besteht, damit der Inhalt der Rohrpostbüchse 10 auf einen Blick von außen identifiziert werden kann.

Das Rohrstück 10 mündet an seinem in Fig. 1 linken Ende in einen linken Kopf 12 und am rechten Ende in einen rechten Kopf 13. Die gemeinsame Längsachse der Rohrpostbüchse 10 ist mit 14 und ihr Innenraum mit 15 bezeichnet.

In der Realität hat die Rohrpostbüchse 10 beispielsweise eine Länge von 480 mm und einen lichten Außendurchmesser von 150 mm.

Der linke Kopf 12 umfaßt einen ersten Flansch 20, auf den in Fig. 1 von links ein Befestigungsring 21 aufgeschraubt ist, um einen Filzring 22 gegen einen Befestigungsring 23 zu verschrauben, so daß der Filzring 22 insgesamt axial fixiert ist.

Der in Fig. 1 rechte Kopf 13 umfaßt einen zweiten Flansch 30, auf den ebenfalls ein Befestigungsring 31 für einen Filzring 32 aufgeschraubt ist. Am rechten Ende des zweiten Flansches 30 ist ein Deckel 33 aufgesetzt, der mittels eines Scharnieres 34 um eine Achse 35 verschwenkbar ist. Die Achse 35 verläuft im Abstand von der Längsachse 14 und in einer Richtung senkrecht zu dieser.

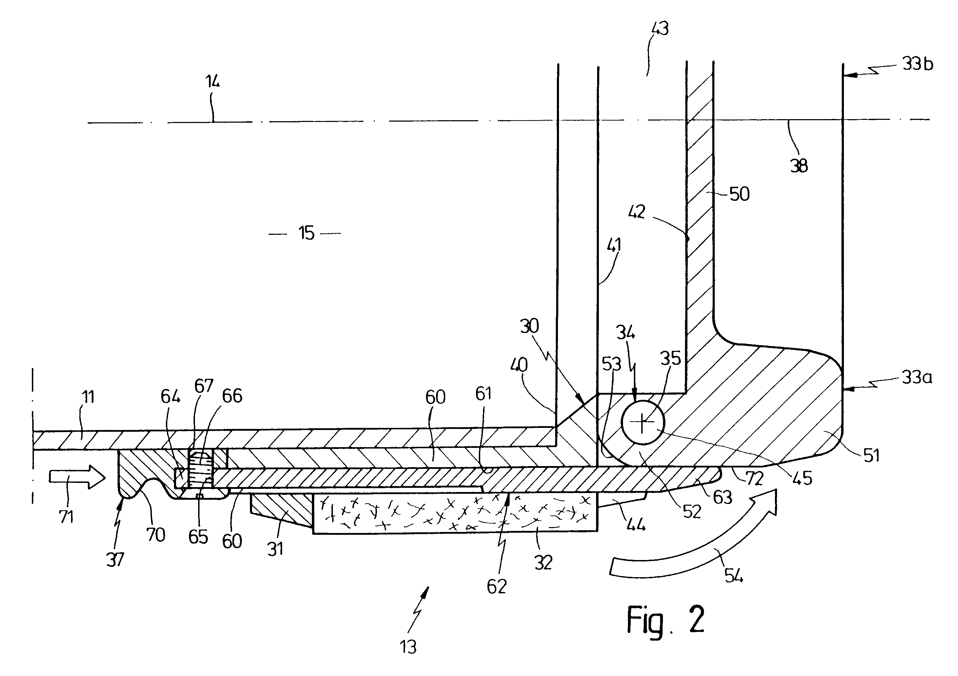

Mit 37 ist ein Betätigungsring bezeichnet, mit dessen Hilfe der Deckel 33 verriegelt oder entriegelt und zugleich beim Verriegeln auch zwangsgesteuert geschlossen werden kann, wie dies weiter unten anhand der Fig. 2 bis 6 noch erläutert werden wird.

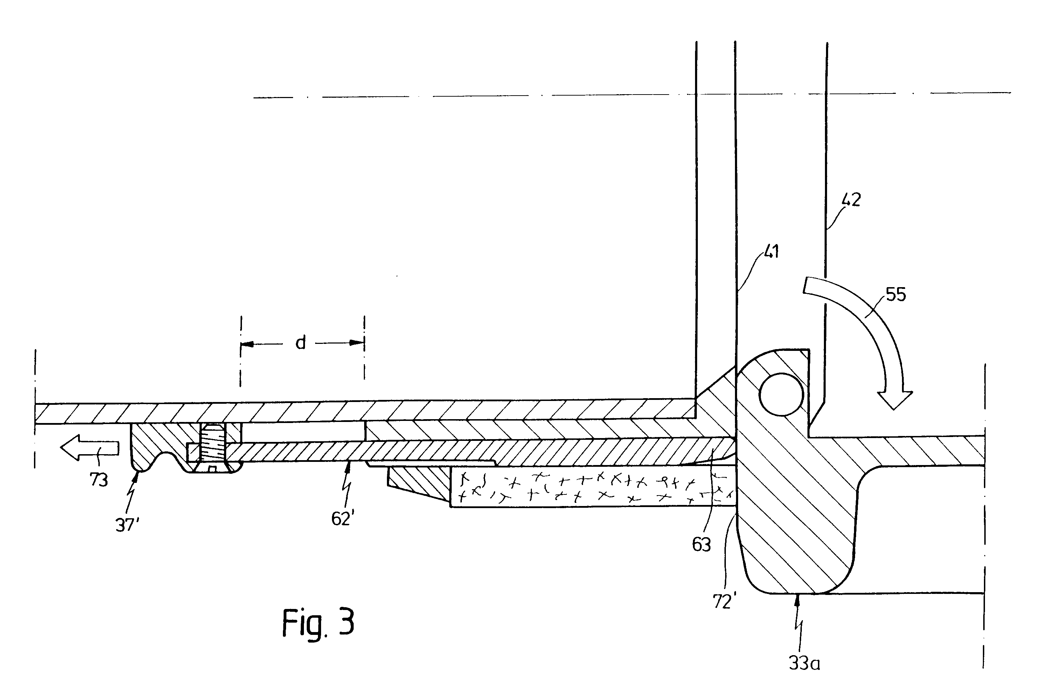

Die stark vergrößerten Schnittdarstellungen der Fig. 2 und 3 zeigen einen Axialschnitt in der Horizontalebene der Fig. 1 durch den rechten Kopf 13.

Man erkennt zunächst aus den Fig. 2 und 3, daß der Deckel 33 zweigeteilt ist. Er ist nämlich in zwei Deckelsegmente 33a und 33b unterteilt, die symmetrisch zur Längsachse 14 in einer Trennebene 38 voneinander getrennt sind.

Betrachtet man nun in Fig. 2 zunächst den zweiten Flansch 30, so erkennt man, daß dieser über einen radialen Absatz 40 verfügt, auf den das Rohrstück 11 stumpf auftrifft. Rechts vom radialen Absatz 40 bildet der zweite Flansch 30 eine erste radiale Anlagefläche 41 und im axialen Abstand davon eine zweite Anlagefläche 42. Der zwischen den Anlageflächen 41, 42 liegende vordere radiale Abschnitt 43 des zweiten Flansches 30 bildet an seinem Außenumfang einen axialen Anschlag 44 für den den rechten Filzring 32. Außerdem ist in den vorderen radialen Abschnitt 43 ein Scharnierzapfen 45 für das Scharnier 34 eingesetzt.

Das Deckelsegment 33a weist einen radialen Boden 50 auf, der in der in Fig. 2 gezeigten Schließstellung des Deckels 33 auf der zweiten Anlagefläche 42 des vorderen radialen Abschnittes 43 des zweiten Flansches 30 aufliegt. An seinem Umfang wird das Deckelsegment 33a durch einen verdickten Rand 51 gebildet. Der Rand 51 geht in Fig. 2 axial nach links in einen Ansatz 52 über und umschließt dort den Scharnierzapfen 45 mit einer entsprechend passenden Bohrung. Auf diese Weise können die Deckelsegmente 33a und 33b um die jeweiligen Scharniere 34 in der Zeichenebene der Fig. 2 oder 3 verschwenkt werden.

Damit dies möglich ist, ist der Ansatz 52 an seiner in Fig. 2 linken unteren Ecke als zylindrischer Bereich 53 ausgebildet, der somit auf der ersten Anlagefläche 41 abrollen kann.

Mit Pfeilen 54 in Fig. 2 und 55 in Fig. 3 ist angedeutet, daß die Deckelsegmente 33a, 33b um die Achse 35 des Scharniers 34 verschwenkt werden können, sofern sie nicht verriegelt sind.

Der zweite Flansch 30 ist an seinem in Fig. 2 und 3 linken Ende als hinterer axialer Abschnitt ausgebildet. In den axialen Abschnitt 60 sind an der Ober- und der Unterseite der Rohrpostbüchse 10 (in der Darstellung der Fig. 1) Axialnuten 61 angebracht, in denen jeweils einer erster Riegel 62 läuft.

Der erste Riegel 62 hat ein vorderes Ende 63 und ein hinteres Ende 64. Das hintere Ende 64 ist mit einer Bohrung 65 versehen, so daß das hintere Ende 64 mittels einer Schraube 66 in eine Gewindebohrung 67 des Betätigungsringes 37 verschraubt werden kann.

Wird nun in eine Griffnut 70 des Betätigungsringes 37 eingegriffen und dieser in axialer Richtung verschoben, wie mit Pfeilen 71 in Fig. 2 und 73 in Fig. 3 angedeutet, so verschiebt sich der Betätigungsring 37 in axialer Richtung und nimmt dabei die ersten Riegel 62 an der Unter- und der Oberseite der Rohrpostbüchse 10 mit.

In Fig. 2 ist nun die Verriegelstellung, d.h. die Schließstellung des Deckels 33 dargestellt. In dieser Verriegelstellung steht das vordere Ende 63 des ersten Riegels 62 axial über die Anlageflächen 41 und 42 vor und liegen an einer Umfangsfläche 72 des verdeckten Randes 51 der Deckelsegmente 33a, 33b an. Es ist leicht einzusehen, daß in dieser Verriegelstellung ein Verschwenken der Deckelsegmente 33a, 33b nicht möglich ist.

Wenn nun der Betätigungsring 37 in Richtung des Pfeiles 73 der Fig. 3 axial nach links verschoben wird, und zwar um den in Fig. 3 eingezeichneten axialen Abstand d, so fährt das vordere Ende 63 der Riegel 62 bis hinter die erste Anlagefläche 41 zurück. Nun ist der Weg frei für ein Verschwenken der Deckelsegmente 33a, 33b, wie in Fig. 3 deutlich zu erkennen ist. Dort sind die verschwenkten Elemente jeweils mit demselben Bezugszeichen unter Hinzufügung eines ' versehen.

Aus den Bewegungsbildern der Fig. 2 und 3 wird ferner deutlich, daß sich die Deckelsegmente 33a, 33b selbsttätig öffnen, wenn die Rohrpostbüchse bei zurückgezogenem ersten Riegel 62 senkrecht mit dem Deckel 33 nach unten gehalten wird, weil dann nämlich die Schwerpunktslage der Deckelsegmente 33a, 33b dafür sorgt, daß diese fast vollständig aufschwenken.

Wichtig ist ferner, daß dann, wenn der Betätigungsring 37 aus der in Fig. 3 eingezeichneten Stellung 37' wieder in Richtung des Pfeiles 71 der Fig. 2 nach rechts verschoben wird, das vordere Ende 63 die Umfangsfläche 72 vor sich herschiebt und damit die Deckelsegmente 33a und 33 b zwangsgesteuert in die Schließstellung gebracht werden. Auf diese Weise ist ein vollautomatisches Öffnen und Verschließen der Rohrpostbüchse 10 möglich, wenn sich diese in der bereits erwähnten Vertikalstellung mit dem Deckel 33 nach unten befindet. Beim Zurückziehen der ersten Riegel 62 klappen nämlich die Deckelsegmente 33a, 33b selbsttätig auf und beim Ausfahren der ersten Riegel 62 werden diese zwangsgesteuert wieder verschlossen. Gesonderte Betätigungselemente für die Deckelsegmente 33a, 33b sind somit nicht erforderlich.

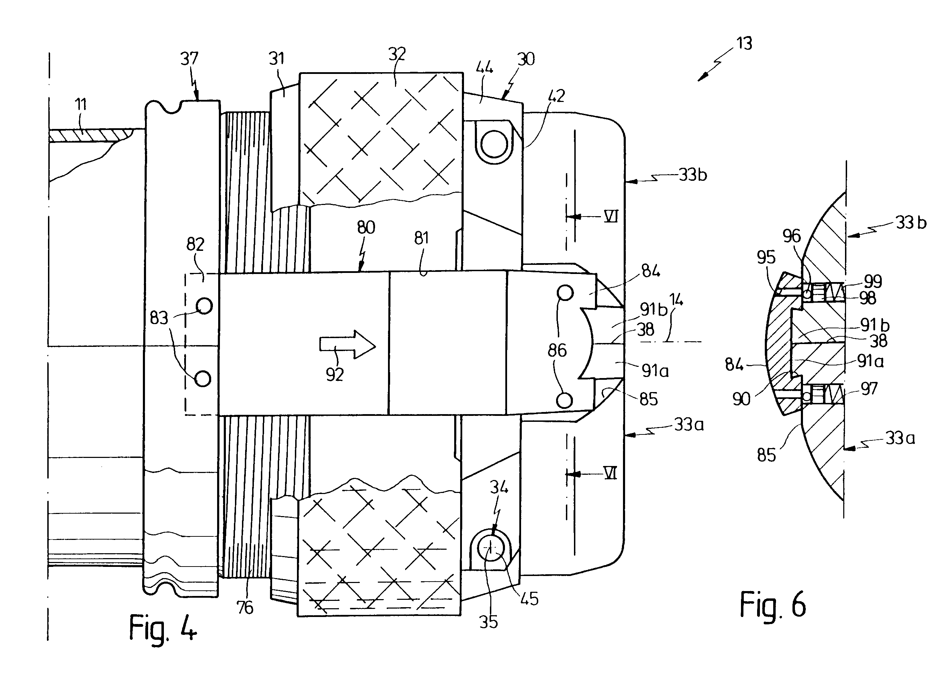

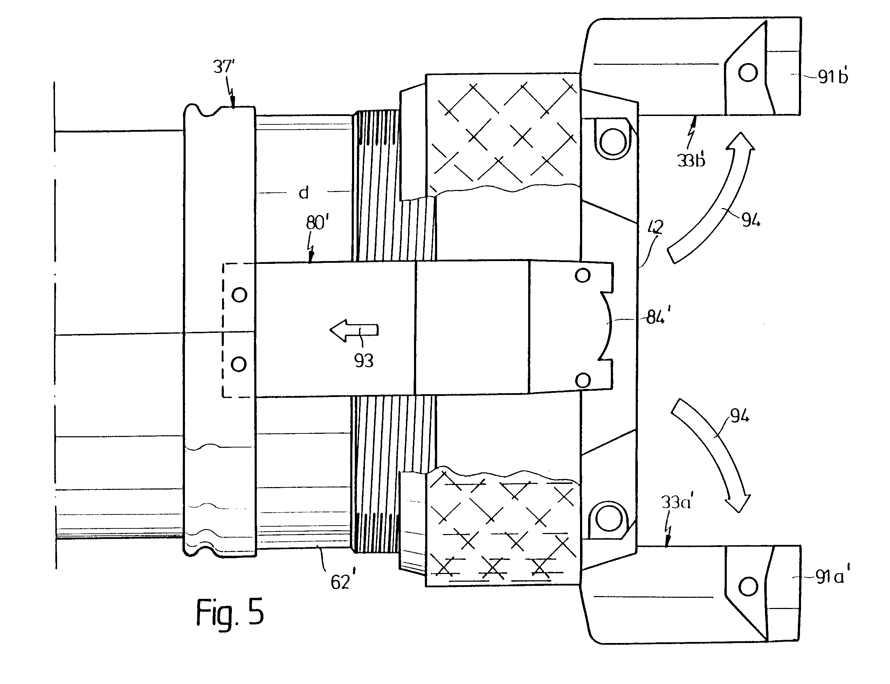

Während bislang ein Verriegelmechanismus mit den ersten Riegeln 62 beschrieben wurde, die sich in der Darstellung der Rohrpostbüchse 10 gemäß Fig. 1 in der Horizontalebene auf beiden Seiten der Rohrpostbüchse 10 befinden, soll nun anhand der Fig. 4 und 5 ein weiterer Riegelmechanismus beschrieben werden, bei dem zweite Riegel 80 wirksam sind, die in der Darstellung der Rohrpostbüchse 10 in Fig. 1 oben und unten an der Rohrpostbüchse 10 angeordnet sind, wie in Fig. 1 eingezeichnet.

Die Draufsichten der Fig. 4 und 5 zeigen zunächst, daß der zweite Flansch 30 an seinem in Fig. 4 linken Ende mit einem Gewindeabschnitt 76 versehen sind, so daß der Befestigungsring 31 von links aufgeschraubt werden kann, um den Filzring 32 zu fixieren.

An der Ober- und Unterseite des zweiten Flansches 30 ist in diesen, und zwar durch den Gewindeabschnitt 76 hindurch, jeweils eine Axialnut 81 eingebracht, in der die zweiten Riegel 80 laufen.

Der in Fig. 4 dargestellte zweite Riegel 80 hat ein hinteres Ende 82, das mit Schrauben 83 im Betätigungsring 37 fixiert ist, ebenso wie dies zuvor in den Fig. 2 und 3 für die ersten Riegel 62 beschrieben wurde.

Ein vorderes Ende 84 des zweiten Riegels 80 ragt in der in Fig. 4 dargestellten Verriegelstellung mit geschlossenem Deckel 32 über die zweite Anlagefläche 42 nach rechts hinaus.

Im Bereich des vorderen Endes 84 sind die Deckelsegmente 33a, 33b mit einem flachen Abschnitt 85 versehen, der besonders gut in der Schnittdarstellung in Fig. 6 zu erkennen ist. Im Bereich des flachen Abschnittes 85 sind ferner elastische Rastelemente 86 angeordnet, deren Funktion anhand der Fig. 6 noch beschrieben wird.

Wichtig ist in diesem Zusammenhang, daß die Unterseite des zweiten Riegels 80 mit einer Schwalbenschwanznut 90 versehen ist, die in Fig. 6 deutlich erkennbar ist. Die Schwalbenschwanznut 90 umgreift in der in den Fig. 4 und 6 dargestellten Verriegelstellung zwei halbe Schwalbenschwanzfedern 91a, 91b, die im Bereich der Trennebene 38 an die Deckelsegmente 33a und 33b aus dem flachen Abschnitt 85 heraus angeformt sind. Es ist leicht einsehbar, daß der zweite Riegel 80 damit die Deckelsegmente 33a, 33b formschlüssig miteinander verbindet.

In Fig. 6 sind ferner die Einzelheiten der elastischen Rastelemente 86 zu erkennen.

Diese bestehen im wesentlichen aus Bohrungen 95 durch das vordere Ende 84 des zweiten Riegels 80, wobei die auf den flachen Abschnitt 85 ausmündenden Enden der Bohrungen 95 einen vorbestimmten Querschnitt haben. In den Deckelsegementen 33a, 33b sind zu den Bohrungen 95 koaxiale, jedoch größere Bohrungen 97 vorgesehen. Die in den flachen Abschnitt 85 ausmündenden Öffnungen dieser Bohrungen 97 sind im Querschnitt verengt. Unterhalb der Engstellen befinden sich Kugeln 96, die mittels eines Druckstücks 98 und einer Feder 99 gegen die Engstellen gedrückt werden. Auf diese Weise fassen die oberen Kappen der Kugeln 96 in die Bohrungen 95 am vorderen Ende 84 des zweiten Riegels 80, wenn sich dieser in der Verriegelstellung befindet. Um die Verriegelstellung zu verlassen, muß der zweite Riegel 80 axial verschoben werden, was nur dann möglich ist, wenn die Kugeln 96 gegen die Kraft der Feder 99 in die Bohrungen 97 gedrückt werden.

Mit einem Pfeil 92 ist in Fig. 4 dieser verriegelte Endzustand angedeutet, in dem die Deckelsegmente 33a, 33b formschlüssig miteinander verbunden und der zweite Riegel 80 zugleich an den Deckelsegmenten 33a, 33b elastisch verrastet ist.

Wird nun der zweite Riegel 80 in die Position 80' der Fig. 5 gebracht, in dem er axial in Richtung eines Pfeiles 93 nach links verschoben wird, so werden sowohl die formschlüssige Verriegelung wie auch die Verrastung freigegeben und die Deckelsegmente 33a, 33b können sich in Richtung der Pfeile 95 der Fig. 5 nach außen öffnen, wie dies bereits geschildert wurde.

## Patentansprüche

1. Rohrpostbüchse mit mindestens einem mit einem Deckel (33) versehenen Kopf (13), wobei der Deckel (33) mittels am Kopf (13) angeordneter und bewegbarer Riegelmittel (37, 62, 80) in eine Offenstellung sowie eine Schließstellung bringbar und mindestens in der Schließstellung verrastbar ist, wobei die Riegelmittel (37, 62, 80) in einer Richtung (71, 73, 92, 93) parallel zu einer Längsachse (14) der Rohrpostbüchse (10) bewegbar sind und wobei der Deckel (33) um mindestens eine Schwenkachse (35) schwenkbar ist, die senkrecht zu einer Längsachse (14) der Rohrpostbüchse (10) verläuft, dadurch gekennzeichnet, daß die Riegelmittel (37, 62, 80) auf einer Umfangsfläche eines Flansches (30) laufen und den Deckel (33) in der Schließstellung an einer Umfangsfläche (72) umschließen und daß die mindestens eine Schwenkachse (35) in unmittelbarer Nähe der Umfangsfläche (72) des Deckels liegt.

2. Rohrpostbüchse nach Anspruch 1, dadurch gekennzeichnet, daß der Deckel (33) aus mindestens zwei Segmenten (33a, 33b) besteht, die jeweils um in einer Radialebene zur Längsachse (14) liegende Schwenkachsen (35) schwenkbar sind.

3. Rohrpostbüchse nach einem oder mehreren der Ansprüche 1 bis 2, dadurch gekennzeichnet, daß die Riegelmittel (37, 62, 80) den Deckel (33) formschlüssig ergreifen.

4. Rohrpostbüchse nach Anspruch 2 und 3, dadurch gekennzeichnet, daß die Riegelmittel (37, 80) einen Riegel (80) umfassen, der zwei Segmente (33a, 33b) des Deckels (33) entlang einer Trennebene (30) der Segmente (33a, 33b) gemeinsam ergreift und in der Schließstellung formschlüssig hält.

5. Rohrpostbüchse nach einem oder mehreren der vorhergehenden Ansprüche, dadurch gekennzeichnet, daß die Riegelmittel (37, 62, 80) einen axial verschiebbaren Betätigungsring (37) umfassen, an dem axial laufende Riegel (62, 80) befestigt sind.

6. Rohrpostbüchse nach einem oder mehreren der Ansprüche 1 bis 5, dadurch gekennzeichnet, daß die Riegelmittel (37, 62, 80) zugleich ein Öffnen oder ein Schließen des Deckels (33) bewirken.

## Claims

1. Tube dispatch carrier with one or more heads (13) which are equipped with a cover (33), in which the cover (33) can be moved into an open position and into a closed position and locked, at least in the closed position, by means of movable locking devices (37, 62, 80) disposed on the head (13), the locking devices (37, 62, 80) being capable of being moved in a direction (71, 73, 92, 93) parallel to a longitudinal axis (14) of the tube dispatch carrier (10) and the cover (33) being capable of being swivelled around one or more swivelling axes (35) running perpendicular to a longitudinal axis (14) of the tube dispatch carrier (10), characterized in that the locking devices (37, 62, 80) run on a circumferential surface of a flange (30) and enclose a circumferential surface (72) of the cover (33) in the closed position and in that the one or more swivelling axes (35) are located immediately adjacent to the circumferential surface (72) of the cover.

2. Tube dispatch carrier according to Claim 1, characterized in that the cover (33) is comprised of two or more segments (33a, 33b), each of which is capable of swivelling around swivelling axes (35) lying in a radial plane relative to the longitudinal axis (14).

3. Tube dispatch carrier according to either of Claims 1 or 2, characterized in that the locking devices (37, 62, 80) grip the cover (33) in a form-fit.

4. Tube dispatch carrier according to either of Claims 2 or 3, characterized in that the locking devices (37, 80) comprise a catch (80) which grips two segments (33a, 33b) of the cover (33) together along a parting plane (30) of the segments (33a, 33b), holding them in the closed position by a form-fit.

5. Tube dispatch carrier according to any one of the preceding Claims, characterized in that the locking devices (37, 62, 80) comprise an axially displaceable actuating ring (37) to which are fixed catches (62, 80) which run in an axial direction.

6. Tube dispatch carrier according to any one of Claims 1 to 5, characterized in that the locking devices (37, 62, 80) effect both opening and closing of the cover (33).

## Revendications

1. Boîte d'envoi de pneumatiques avec au moins une tête (13) pourvue d'un couvercle (33), dans laquelle le couvercle (33) peut être amené dans une position ouverte ainsi que dans une position fermée par des moyens de verrouillage (37, 62, 80) disposés sur la tête (13) et mobiles et peut être encliqueté au moins dans la position fermée, les moyens de verrouillage (37, 62, 80) pouvant être déplacés dans une direction (71, 73, 92, 93) parallèle à un axe longitudinal (14) de la boîte d'envoi de pneumatiques (10) et le couvercle (33) pouvant pivoter autour d'au moins un axe de pivotement (35) perpendiculaire à un axe longitudinal (14) de la boîte d'envoi de pneumatiques (10), caractérisée en ce que les moyens de verrouillage (37, 62, 80) s'étendent sur une surface circonférentielle d'une bride (30) et entourent le couvercle (33) dans la position fermée sur une surface circonférentielle (72) et en ce que l'axe de pivotement (35) au nombre d'un au moins se situe à proximité immédiate de la surface circonférentielle (72) du couvercle.

2. Boîte d'envoi de pneumatiques selon la revendication 1, caractérisée en ce que le couvercle (33) se compose d'au moins deux segments (33a, 33b), qui peuvent pivoter autour d'axes de pivotement (35) respectifs situés dans un plan radial par rapport à l'axe longitudinal (14).

3. Boîte d'envoi de pneumatiques selon l'une quelconque des revendications 1 à 2, caractérisée en ce que les moyens de verrouillage (37, 62, 80) saisissent le couvercle (33) par complémentarité de forme.

4. Boîte d'envoi de pneumatiques selon les revendications 2 et 3, caractérisée en ce que les moyens de verrouillage (37, 80) comprennent un verrou (80), qui saisit ensemble deux segments (33a, 33b) du couvercle (33) le long d'un plan de séparation (30) des segments (33a, 33b) et les maintient dans la position de fermeture par complémentarité de forme.

5. Boîte d'envoi de pneumatiques selon l'une quelconque des revendications précédentes, caractérisée en ce que les moyens de verrouillage (37, 62, 80) comprennent une bague d'actionnement (37) coulissant dans le sens axial, sur laquelle sont fixés des verrous (62, 80) orientés dans le sens axial.

6. Boîte d'envoi de pneumatiques selon l'une quelconque des revendications 1 à 5, caractérisée en ce que les moyens de verrouillage (37, 62, 80) réalisent à la fois une ouverture et une fermeture du couvercle (33).
